# EUROPEAN PATENT APPLICATION

(11) **EP 4 684 707 A1**
(43) Date of publication of application: **28.01.2026**
(21) Application number: 24191236.9
(22) Date of filing: 26.07.2024
(51) Int. Cl.: A47J 43/07, A47L 15/42, D06F 34/30, D06F 34/32, F24C 7/08, F25D 29/00

(54) **USER INTERFACE, ASSEMBLY METHOD AND HOUSEHOLD APPLIANCE**

(71) Applicant: BSH Hausgeräte GmbH, 81739 München (DE)
(72) Inventor: Decman, Igor, 3232 Ponikva (SI); Kovacec, Bostjan, 1420 Trbovlje (SI); Svara, Matej, 6221 Dutovlje (SI)

(57) **Abstract**

Disclosed is a user interface for a household appliance, wherein a knob arrangement and a display arrangement are installed on a common support structure which is held in place inside the housing appliance via a first form fit engagement of the display arrangement with the housing and via a second form fit engagement of the support structure with the housing, a method for assembling and a household appliance.

## Description

The present invention concerns a user interface for a household appliance, a method for assembling such user interface and a household appliance having such user interface.

Modern household appliances often have a user interface with a display, in particular a touch screen, and a rotatable knob for choosing a program or for customising a program. Arranging such user interface in or on a housing of the household appliance is always challenging in terms of watertightness and stability. One common way is to use additional sealing elements and several different fastening elements.

It is an object of the present invention to provide a user interface than enables an easy, waterproof and tight, but releasable fixation in a housing of a household appliance, a method for assembling such user interface easily and a household appliance with a user interface which is easily installed in a waterproof and tight manner.

The object is achieved by user interface according to claim 1, by a method according to claim 8 and by a household appliance according to claim 10. Advantageous embodiments are disclosed in the dependent claims, the description and the figures.

A user interface according to the invention for a household appliance has a support structure, a knob arrangement and a display arrangement. The support structure is adapted to receive the knob arrangement and to receive the display arrangement. Further on, it is adapted to be placed in a housing of the household appliance such that a knob of the knob arrangement and a display of the display arrangement are accessible by a user. Thereby, the support structure is adapted to be in a first form fit engagement with the housing. The display arrangement is adapted to be in a second form fit engagement with the housing.

The form fit engagements enable an easy assembling and disassembling without any special tools. The form fit engagements are adjusted so that constant holding forces are applied and in particular that air-gaps are closed without any sealing element between the components. Basically, no additional fastening elements are needed to fix the interface in the household appliance. Further on, a high reliability, assembly stiffness, adaptability and simple serviceability are reached.

Preferably, the form fit engagements are spaced apart from each other. For instance, one form fit engagement is provided at a lower area of the user interface and the other form fit engagement is provided at an upper area of the user interface. By means of this, a stable fixation of the user interface in the housing is realised.

The number of parts can further be reduced, if a main board of the knob arrangement is equipped with a connection element for the knob and is held in place on/at the support structure via form fit engagement as well.

In order to arrange the main board in its right position, the support structure has at least one centring element for centring the main board on it.

The display arrangement can have a main board that is adapted to secure components of the display arrangement in their positions. By means of this, the number or parts can be further reduced. Exemplary components are the display itself, a display holder, a protection foam, an interface carrier structure or a user interface cover.

By means of screws, the main board of the display arrangement is tightly and releasably connected to the display cover. Any other fastening means can also be used, for instance fasteners, bolts, nuts, pins, studs, rivets or combinations thereof.

Preferably, the interface carrier structure itself has connection elements which are adapted to form the form fit engagement with corresponding elements of the support structure. By means of this, a stable connection is achieved.

A method for assembling the user interface according to the invention has at least the following steps:
- Assembling the display arrangement;
- Attaching the knob arrangement to the support structure;
- Attaching the display arrangement to the support structure; and
- Installing the support structure in the housing.

During installation of the support structure and thus during installation of the interface, first, the form fit engagement of the display arrangement with the housing is established and then, second, the form fit engagement of the support structure with the housing is established.

A household appliance according to the invention has an inventive user interface.

In the following, preferred embodiments of the present invention are explained with respect to the accompanying drawings. As is to be understood, the various elements and components are depicted as examples only, may be facultative and/or combined in a manner different than that illustrated. Reference signs for related elements are used comprehensively and not defined again for each figure. Shown is schematically in
- Fig. 1a:: a perspective view of base of a household appliance according to the invention;
- Fig. 1b:: exemplary attachment of the household appliance;
- Fig. 2a:: a front view of an installed user interface according to the invention;
- Fig. 2b:: a back view of an installed user interface according to the invention;
- Fig 3:: an inner view of a housing of the household appliance receiving the user interface;
- Fig 4a:: an assembled display arrangement;
- Fig 4b:: an exploded view of the display arrangement;
- Fig 5a:: a front view of an assembled knob arrangement;
- Fig 5b:: a back view of an assembled knob arrangement; and
- Fig 5c:: an exploded view of an assembled knob arrangement;

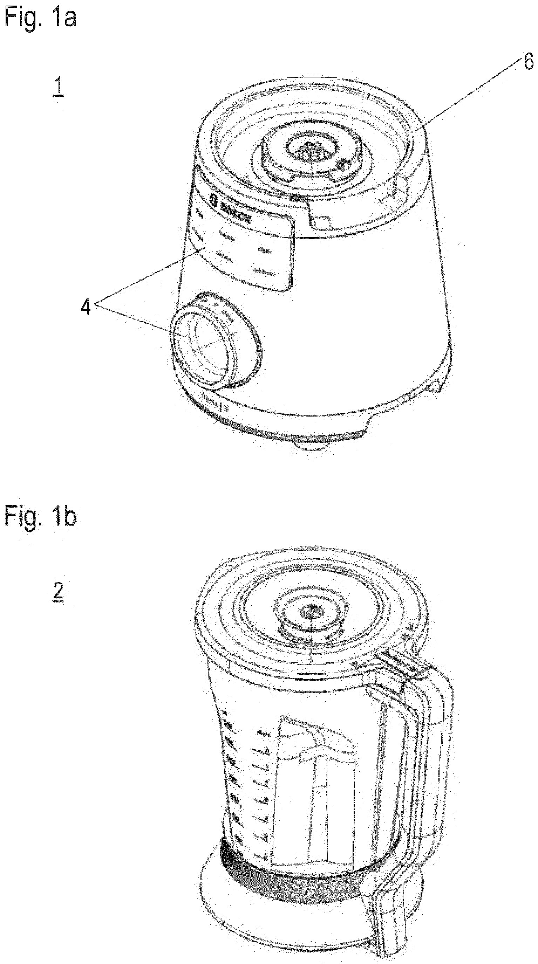

In Figure 1a, a base 1 of an inventive household appliance is shown and in Figure 1b an exemplary attachment 2 for the base 1 is shown. The base 1 basically houses an electric motor to drive a tool of the attachment 2, a control system, a user interface 4 according to the invention and at its top side 6 coupling means to attach different attachments 2, such as a blender jar, a so called bottle-to-go bottle (jar) and the like.

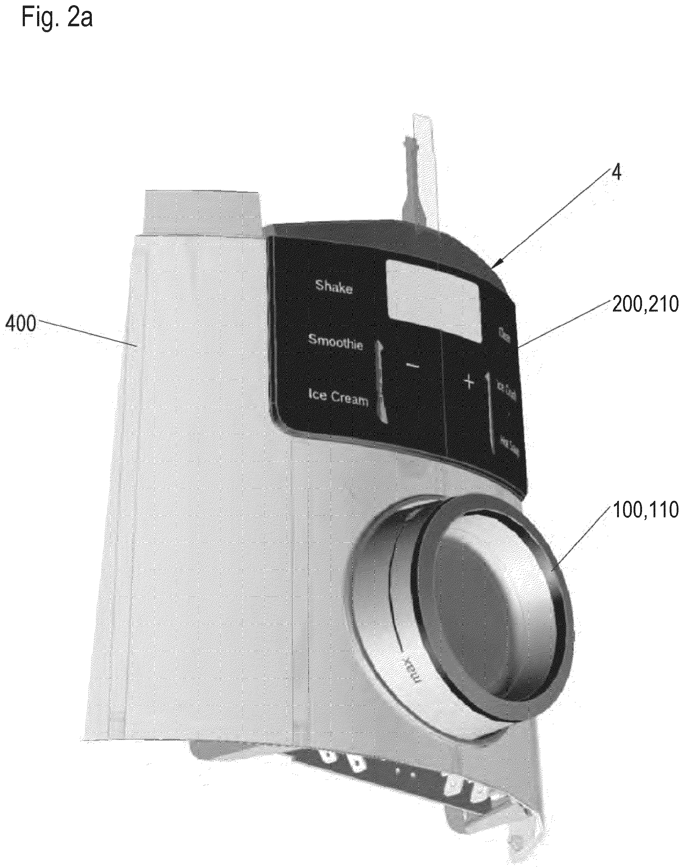

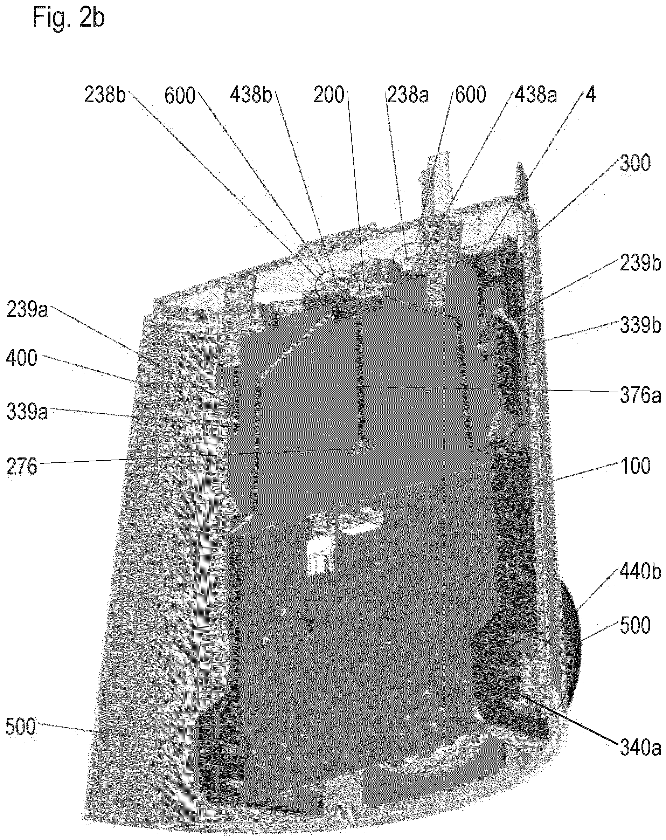

As illustrated in Figures 2a and 2b, the user interface 4 has a knob arrangement 100 and a display arrangement 200. The knob arrangement 100 can be used, for instance to switch on and off the appliance, to set a pulsing operation mode or to set a rotational speed of the tool manually, whereas via the display arrangement 200 a program can be chosen in general and program parameters can be set.

The knob arrangement 100 and the display arrangement 200 are attached to a support structure 300 which is mounted inside a housing 400 of the base 1, such that a knob 110 of the knob arrangement 100 and a display 210 of the display arrangement 200 are accessible from the outside by a user.

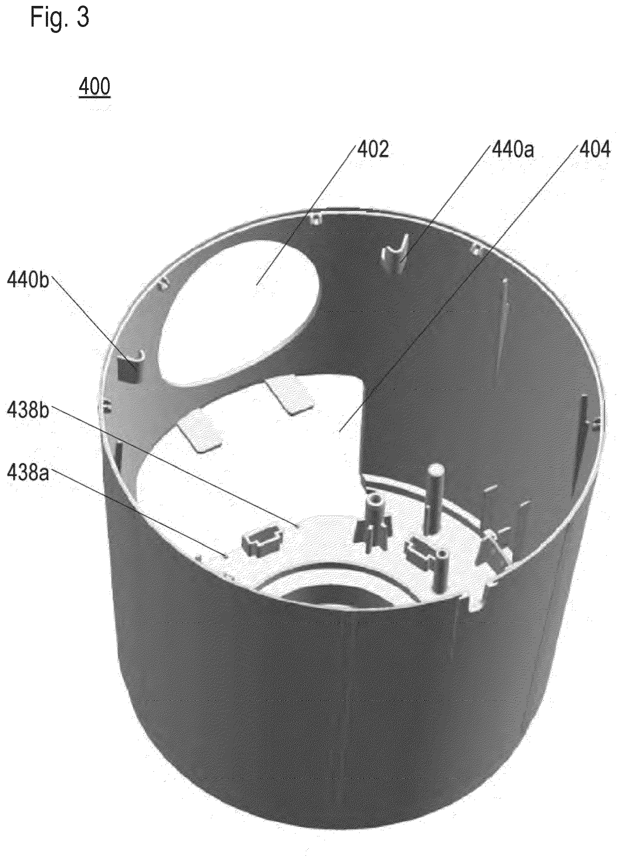

With respect to Figures 2a, 2b and 3, in the shown embodiment here, the support structure 300 is in form fit engagement 500 with the housing 400, whereas the display arrangement 200 is in form fit engagement 600 with the housing 400 as well. The form fit engagements 500, 600 are spaced apart from each other. Here, the form fit engagement 500 (via support structure 300) is at lower lateral edge regions of the support structure 300, whereas the form fit engagement 600 (via display arrangement 200) is at upper edge regions. In order to create the accessibility to the user interface, respective openings 402, 404 are provided in the housing 400.

The form fit engagements 500, 600 are established by four snap and click connections. Each form fit engagement 500, 600 comprises two snap- and click connections. In order to install the user interface 4 inside the base housing 400, it is positioned from below into the housing 400 and then after the form fit engagement 600 (via display arrangement 200) is provisionally made, the form fit engagement 500 (via support structure 300) is established via tilting the user interface 4 about the form fit engagement 600 until the snap- and click elements of the form fit engagement 500 are in engagement with each other. Due to the perspective view in Figure 2b, the form fit engagement 500 on the lower left side is not shown.

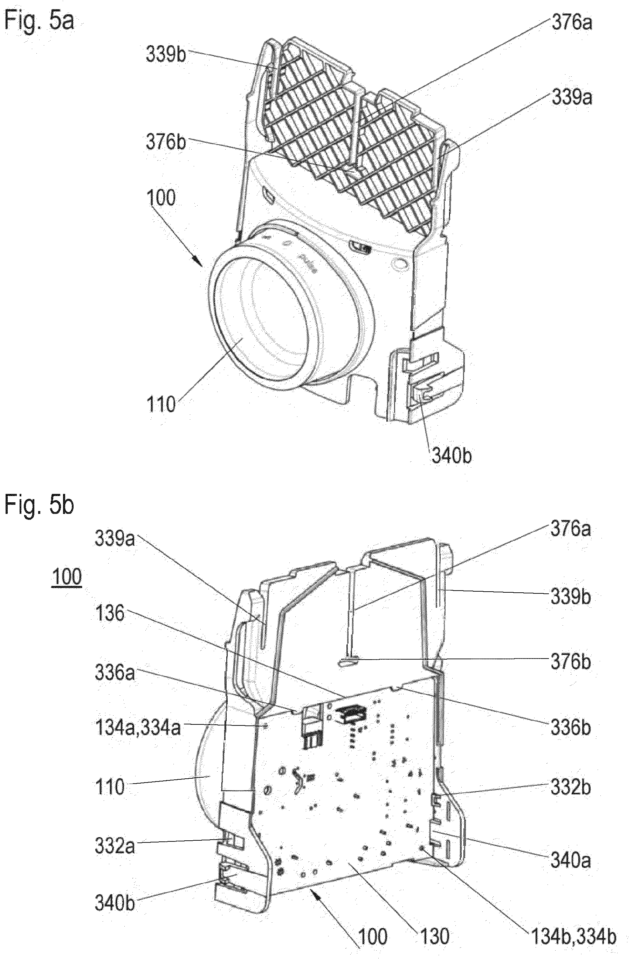

Here the form fit engagement 500 (via support structure 300) is made by hook elements 440a, 440b, extending internally from the housing 400, and by respective counter-elements 340a, 340b of the support structure 300 (see also Figures 5a and 5b).

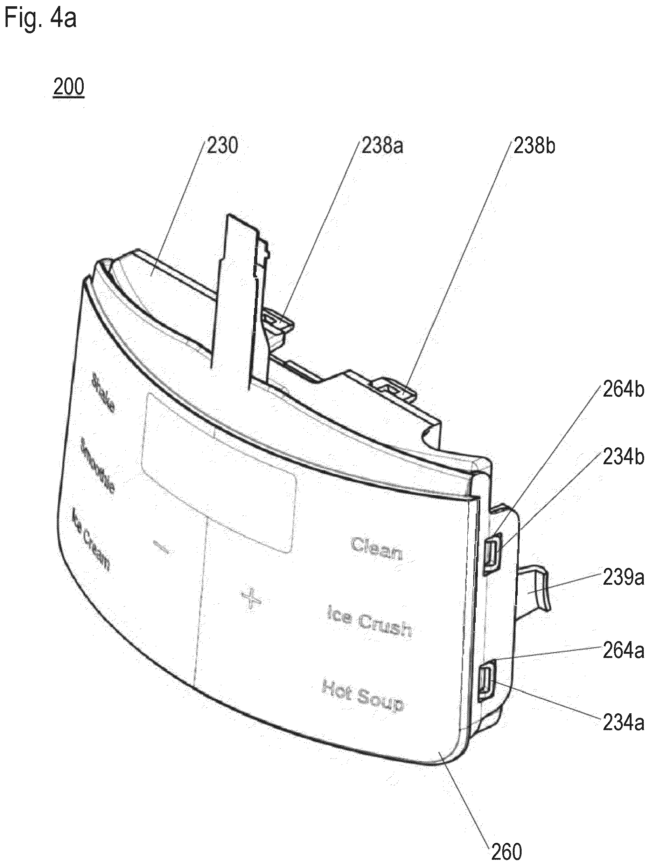

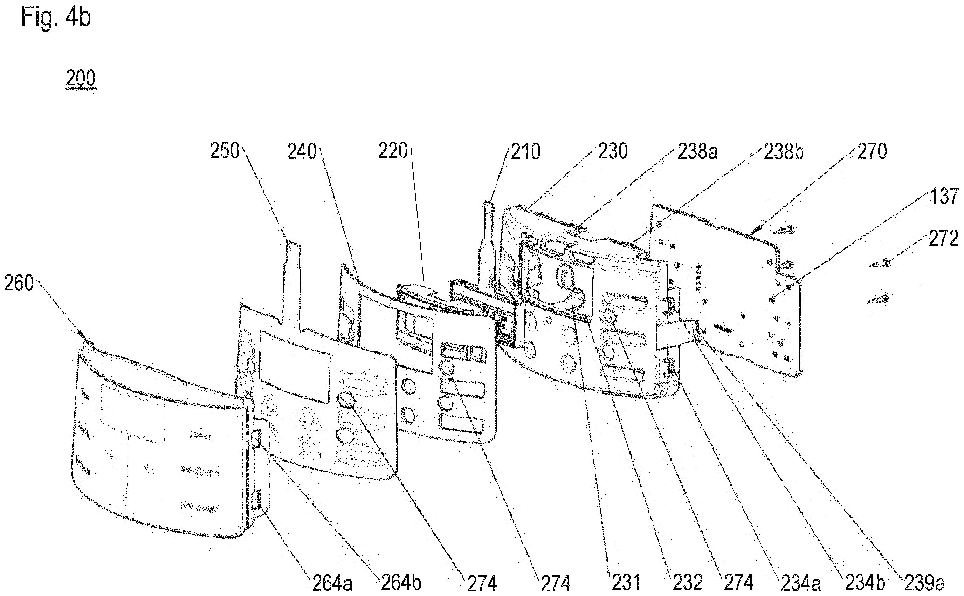

The form fit engagement 600 (via display arrangement 200) is made by two projections 438a, 438b, extending internally from the housing 400, and by respective lug-like (bracket-like) counter-elements 238a, 238b of the display arrangement 200 (see also Figures 4a and 4b).

As can also be seen in Figure 3 (with the housing 400 being turned upside down), the housing 400 has a conical shape, wherein its lower side is widened compared to its upper side. This also supports the assembling and the form fit engagements 500, 600.

In Figure 4a, the assembled display arrangement 200 is shown before installation on the support structure 300. In Figure 4b, components of the display arrangement 200 and their assembly order are shown.

In particular, the display arrangement 200 comprises the display 210, for instance a touchscreen, a display holder 220, an interface carrier structure 230, a protection foam 240, a capacity foil 250, a cover 260 and a main board 270.

First the display 210 is placed in the display holder 220. Both components 210, 220 are then pushed together into a recess 232 of the interface carrier structure 230 from the front side. By means of an elastic rear stop element 231, the final position of the display holder 220 is defined.

After that, the protection foam 240, the capacity foil 250 and the cover 260 are installed from the front side on the interface carrier structure 230. Thereby, the cover 260 gets in form fit engagement with the interface carrier structure 230 such that the components 210, 220, 230, 240, 250 are held in place to each other. For this purpose, the interface carrier structure 230 has at its opposite lateral sides two lug-like openings 234a, 234b respectively, which get into engagement with corresponding lateral counter elements 264a, 264b of the cover 260.

Then, the main board 270 is assembled from the back side. Its position is also secured with form fit engagement, in particular via snap fit (not shown).

Finally, the assembly is secured by (four) screws 272 which are in (thread) engagement with recesses of the cover 260 with or without internal threads (not shown). The recesses with or without internal threads are provided in pin-like protrusions (not shown) of the cover 260 which extend through respective holes 274 in the components 220, 230, 240, 250. The screws 272 are assembled and tightened from the back side and are led through smaller holes 137 in the main board 270.

In order to engage the display arrangement 200 at the support structure 300, two snap latches 239a, 239b are provided laterally on the interface carrier structure 230. For this purpose, the support structure 300 has two vertical slots 339a, 339b as counter-elements (see also Figures 2b, 5a and 5b). Further on, on the back of the main board 270 an arrow-like projection 276 is provided that during installation runs along a centred slot 376a of the support structure 300 until it gets into final form fit engagement with a widened bottom portion 376b of the slot 376a.

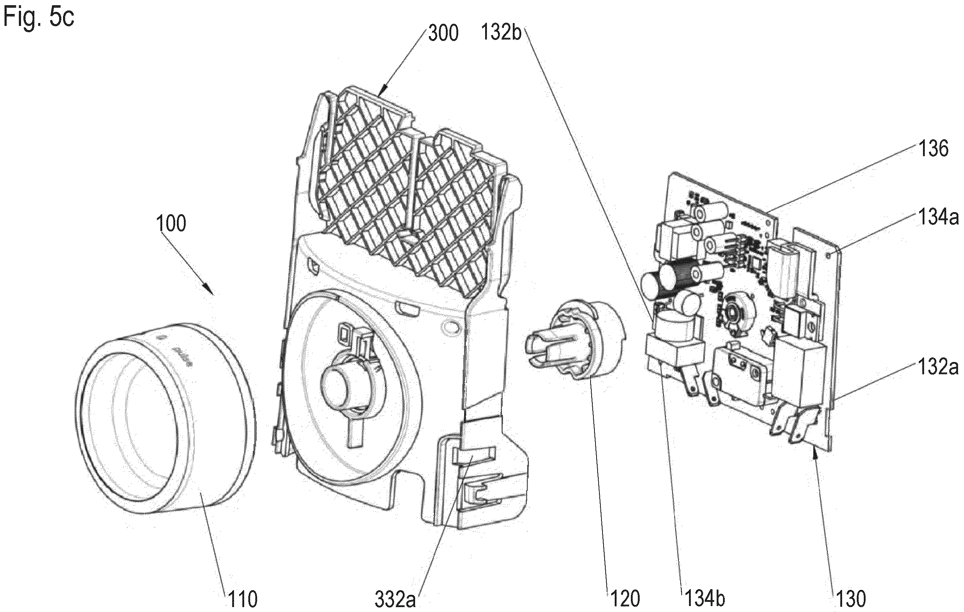

In Figures 5a and 5b, the assembled knob arrangement 100 is shown. In Figure 5c, the assembly of the knob arrangement 100 is illustrated. The knob arrangement 100 comprises the knob 110, a knob cam 120 and a main board 130. Here, the support structure 300 acts as a direct knob arrangement holder.

First, the knob cam 120 is placed into a hole of the support structure 300 from the back side. After that, the knob 110 is placed on the knob cam 120 from the front side. The mechanical connection of these two components 110, 120 is done by form fit engagement, in particular via snap fit engagement. Finally, the main board 130 is placed on the support structure 300 from the back side and held in place via form fit engagement. For this purpose, the main board 130 and the support structure 300 have corresponding snap-fit elements. Here, the support structure 300 has on opposite sides two snap latches 332a, 332b and the main board 130 has corresponding lateral side portions 132a, 132b receiving the snap latches 332a, 332b.

In order to position the main board 130 in its right orientation at the support structure 300, centring elements 134a, 134b, 334a, 334b are provided. Here, the main board 130 has in diametrical opposed corners centring holes 134a, 134b, through which a centring pin 334a, 334b of the support structure 300 is led during assembling.

As also illustrated in Figure 5b, two tooth-like retaining elements 336a, 336b are provided on the back side of the support structure 300 which are configured to get into form fit engagement with an upper edge region 136 of the main board 130 as well.

After the installation of the knob arrangement 100 on the support structure 300, the display arrangement 200 is installed on the support structure 300. This is done by a sliding movement in vertical direction; in particular by introducing the snap latches 239a, 239b into the slots 339a, 339b and the arrow-like projection 276 into the slot 376a, 376b until the final engagement is reached. As soon as the arrow-like projection 276 enters the bottom portion 376b of the slot 376a, the display arrangement 200 is secured in vertical direction.

Finally, the equipped support structure 300 and thus the user interface 4 is mounted inside the housing 400 of the base 1 as described above. This means, the form fit engagements 500, 600 are established by the four snap and click connections. The support structure 300 with the knob arrangement 100 and the display arrangement 200 (the assembled user interface 4) is positioned from below into the housing 400 and then after the form fit engagement 600 (via display arrangement 200) is provisionally made, the form fit engagement 500 (via support structure 300) is established via tilting the user interface 4 about the form fit engagement 600 until the snap- and click elements of the form fit engagement 500 are in engagement with each other.

It should be noted that every form fit engagement (snap and fit connection) is releasable, in particular without any special tools. The form fit engagements are adjusted so that constant holding forces are applied and in particular that air-gaps are closed without any sealing element between the components.

Disclosed is a user interface for a household appliance, wherein a knob arrangement and a display arrangement are installed on a common support structure which is held in place inside the housing appliance via a first form fit engagement of the display arrangement with the housing and via a second form fit engagement of the support structure with the housing, a method for assembling and a household appliance.

### Reference signs

- 1: base
- 2: attachment
- 4: user interface
- 6: top side

- 100: knob arrangement

- 110: knob
- 120: knob arm
- 130: main board (knob arrangement)
- 137: screw hole
- 132a, b: lateral side portion
- 134a, b: centring hole
- 136: upper edged region

- 200: display arrangement

- 210: display
- 220: display holder
- 230: interface carrier structure
- 232: recess
- 234a, 234b: lug-like opening
- 236: stop element
- 238a, b: lug
- 239a, b: snap latch
- 240: protection foam
- 250: capacity foil
- 260: cover
- 264a, b: counter elements
- 270: main board (display arrangement)
- 272: screw
- 274: hole 276 arrow-like projection 300 support structure
- 332a, b: snap latch
- 334a, b: centring pin
- 336a, b: retaining element
- 339a, b: counter element, slot
- 340a, b: counter element
- 376a: slot
- 376b: bottom portion of the slot

- 400: housing
- 402: opening
- 404: opening
- 440a, b: hook element
- 438a, b: projection

- 500: form fit engagement (via support structure 300)
- 600: form fit engagement (via display arrangement 200)

## Claims

1. A user interface (4) for a household appliance, comprising:
- a support structure (300);
- a knob arrangement (100) having a knob (110); and
- a display arrangement (200) having a display (210);
wherein the support structure (300) is adapted
- to receive the knob arrangement (100);
- to receive the display arrangement (200);
- to be placed in a housing (400) of the household appliance such that the knob (110) and the display (210) are accessible by a user; and
- to be in a form fit engagement (500) with the housing (400);
wherein
- the display arrangement (200) is adapted to be in a further form fit engagement (600) with the housing (400).

2. The user interface according to claim 1, wherein one form fit engagement (500) is at a lower area of the user interface (4) and the other form fit engagement (600) is at an upper area of the user interface (4).

3. The user interface according to claims 1 or 2, wherein the knob arrangement (100) has a main board (130) with a connection element for the knob (110) which (main board 130) is held in place on the support structure (300) via form fit engagement.

4. The user interface according to claims 1, 2 or 3, wherein the support structure (300) has at least one centring element (334a, 334b) for centring the main board (130) on it.

5. The user interface according to any of the preceding claims, wherein the display arrangement (200) has a main board (270) that is adapted to fix component positions of the display arrangement (200) to each other.

6. The user interface according to claim 5, wherein the main board (270) of the display arrangement (200) is secured to a display cover (260) via screws (270).

7. The user interface according to any of the preceding claims, wherein an interface carrier structure (230) has connection elements (238a, 238b) which are adapted to form the form fit engagement (600) with corresponding elements (438a, 438b) of the housing (400).

8. A method for assembling the user interface (4) according to any of the preceding claims, having the steps:
- Assembling the display arrangement (200);
- Installing the knob arrangement (100) on the support structure (300);
- Attaching the display arrangement (200) to the support structure (300); and
- Installing the support structure (300) in the housing (400) of a household appliance.

9. The method according to claim 8, wherein during installation of the support structure (300), the form fit engagement (600) of the display arrangement (200) with the housing (400) is established and then the form fit engagement (500) of the support structure (300) with the housing (400) is established.

10. A household appliance comprising a user interface according to one of claims 1 to 7.
